**Europäisches Patentamt**

**European Patent Office**

**Office européen des brevets**

(11) Numéro de publication: **0 031 983**
**A1**

# (12) DEMANDE DE BREVET EUROPEEN

(21) Numéro de dépôt: **80201246.8**

(22) Date de dépôt: **30.12.80**

(51) Int. Cl.³: **B 60 Q 9/00**
**B 60 Q 1/44**

(30) Priorité: **03.01.80 FR 8000049**

(43) Date de publication de la demande:
**15.07.81 Bulletin 81/28**

(84) Etats contractants désignés:
**AT BE DE GB IT LU NL SE**

(71) Demandeur: **Rameil, Jean**
**B.P. 15 Route de la Roche Guyon**
**F-27620 Gasny(FR)**

(84) Etats contractants désignés:
**AT BE DE GB IT LU NL SE**

(71) Demandeur: **Bertouille, Léandre Firmin Jean**
**Rue Général Mac Arthur 36**
**B-1180 Bruxelles(BE)**

(84) Etats contractants désignés:
**DE GB IT LU NL SE AT**

(72) Inventeur: **Rameil, Jean**
**B.P. 15 Route de la Roche Guyon**
**F-27620 Gasny(FR)**

(74) Mandataire: **Pirson, Jean et al,**
**C/O Bureau GEVERS S.A. 7, rue de Livourne**
**B-1050 Brussels(BE)**

(54) **Avertisseur audio-visuel favorisant l'économie d'énergie pour véhicule.**

(57) Dispositif permettant à raison de la rupture d'un équilibre programmé d'obtenir un contact agissant sur un générateur sonore, visuel ou sur la formation d'un mouvement de base électromécanique.

La destruction de l'équilibre se produira soit par l'inertie contrôlée, soit par la force centrifuge, soit par la pesanteur, soit par un choc ou un déplacement.

La principale utilisation sera une économie de carburant découlant de l'obligation de conduire en douceur qui est faite au pilote. Il ne devra pas freiner, ni accélérer avec exagération. Ce dispositif l'incitant à une conduite en douceur.

Ce même dispositif pourra également être utilisé en alarme comme antivol, suspendu à une clenche de porte ou fenêtre, il préviendra grâce à son système auditif, si l'on tourne la poignée. Placé à l'intérieur d'une boule il se mettra à hurler dès le moindre choc ou déplacement de cette boule, donc heurté par la porte......

FIG. 1

"Avertisseur audio-visuel favorisant l'économie d'énergie pour véhicule"

La présente invention favorise et oblige à une conduite souple et coulée autrement dite sans accélération,
freinage ni virage important permettant ainsi une économie de carburant très appréciable. En fonction des essais
effectués dernièrement, il y aurait plus de 20% d'économie
réalisée.

L'appareil agit en fonction de la force centrifuge,
l'inertie, la pesanteur ou l'équilibre à un degré programmé par le conducteur lui-même. Ces forces agissent sur
un contre-poids, sur une petite dose de mercure, le déplacement d'une sphère ou une bille agissant elles-mêmes sur
des contacts ou formant elles-mêmes des contacts. Ces différentes possibilités de détection de rupture d'équilibre
déclenchent à l'aide de contacts appropriés un vibreur
sonore, une sirène, un électro-aimant pouvant agir directement sur différents leviers entre autres même celui du
frein ou celui du carburateur ou signal visuel. Ce signal
sonore ou lumineux rappellera les normes choisies par le
conducteur du véhicule. Fonctionnant sur pile, l'appareil
est autonome et réglable ce qui permet de fixer la limite
d'accélération ou de freinage en fonction du degré d'économie que l'on se fixe, que l'on a choisi et que l'on a
programmé; l'appareil se fixe par ventouse ou par autocollant au tableau de bord ou encore à la place de l'allumecigare.

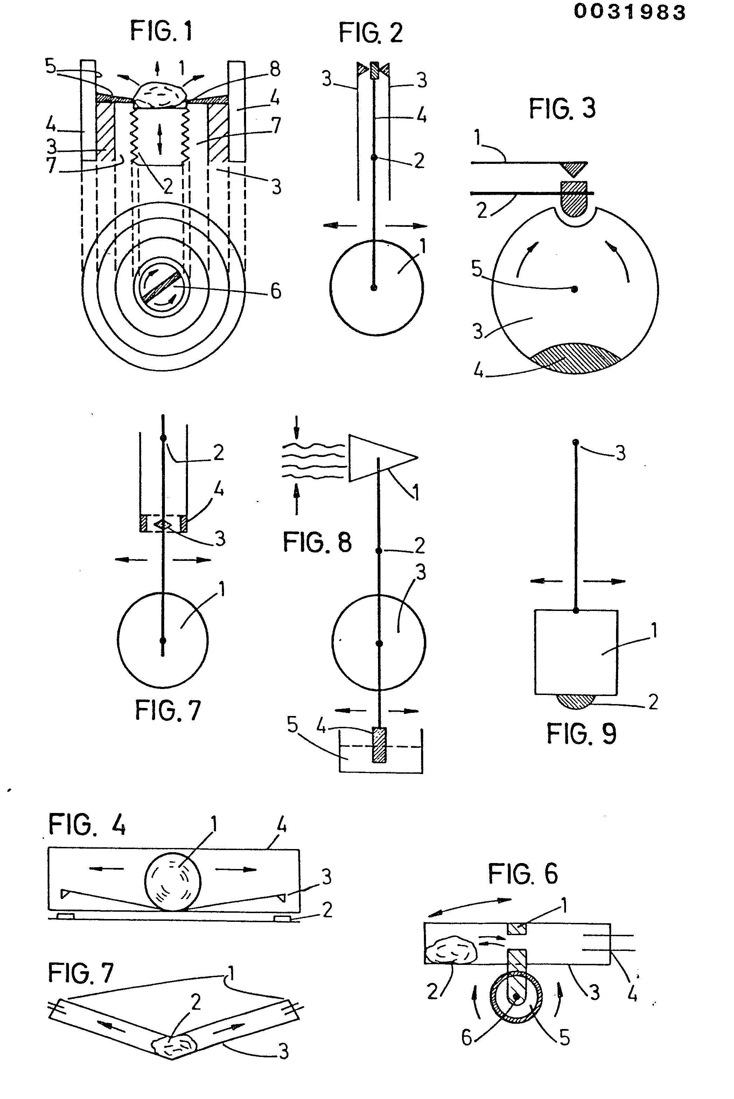

L'appareil objet du brevet peut également limiter
l'usure des pneumatiques contrôlant de la même manière
la force centrifuge du véhicule dans les virages. Cet appareil peut également servir en aviation pour les élèves
pilotes signalant l'angle en virages à ne pas dépasser
et,dans tous les cas, il sert comme indicateur électrique audio-visuel d'inertie, d'équilibre ou de force centrifuge ou de pesanteur. Ce dispositif objet de l'invention peut être utilisé lui-même et dans tous les cas en suspension compensée ou en équilibre pur comme cité en exemple sur la figure 9, il peut être installé dans la cage I en suspension 3 avec un contre-poids d'une valeur différente et plus importante de celui du dispositif principal. Cette cage pourra être bloquée une fois l'équilibre trouvé.

L'appareil objet du brevet peut également servir de niveau pour les maçons, etc...et autres utilisations.

## REVENDICATIONS

1. Dispositif avertisseur permettant soit par une rupture d'équilibre, par une différence de la force centrifuge, par l'inertie, par l'assiette, par l'accélération ou freinage, par le niveau ou par la pesanteur, etc..., d'actionner un système visuel mécanique, ou à l'aide d'un contact d'alimenter un générateur sonore ou visuel, ou les deux réunis, avec un niveau de réglage prédéterminé. Les contacts peuvent être directs ou électroniques, par aimantation par rayons infrarouges ou visibles, par approche de masse, métallique ou non. Caractérisé par une certaine quantité de mercure (I) au centre d'une cuvette , et suivant l'inertie ou la force centrifuge, ce mercure sera projeté vers le bord métallique (4) fermant ainsi le contact (5) entre le cylindre extérieur (4) et le support de pas de vis conducteurs de courant (7). Ces deux parties métalliques sont séparées par une matière isolante quelconque (3), le mercure (conducteur) en reliant ces deux contacts déclenchant ainsi la mise en marche de l'avertisseur. L'action de l'inertie, freinage ou accélération se sera plus ou moins fait sentir en fonction du réglage de la vis (2) laissant le mercure plus ou moins dans le creux, le mercure ayant besoin de plus ou moins de force pour atteindre le bord et fermer ainsi le contact (5). Le fond (8) pourra être une simple cuvette conique isolée de la partie (4).

2. Dispositif avertisseur selon la revendication 1, et la figure 2 , caractérisé par un ou plusieurs contacts (3) sur lesquels agissent un levier support contact (4) relié au balancier (I).

3. Dispositif avertisseur selon la revendication 1, et la figure 3, caractérisé par une roue ou une sphère (3) reliée avec un contre-poids, soit à la base, soit à un autre endroit, ce qui provoquera avec l'inertie la fermeture des contacts 1 et 2, réglables par rapport à l'ampleur du déplacement. La roue peut être placée horizontalement sur son axe (5), la pression du levier support du contact (2) pourra faire le rappel à un point fixe ou un ressort, une aimantation, la déportation de l'axe central par rapport à la verticale, une rampe hélicoïdale supportant la roue. La course de la roue pourra être multipliée à l'aide d'un engrenage ou d'un levier quelconque agissant sur les contacts.

4. Dispositif avertisseur selon la revendication 1. et la figure 4 , caractérisé par une bille se déplaçant dans une cage ou sur une cuvette métallique légèrement conique découpée en lamelles partant du centre en étoiles formant le contact (3), la bille par son poids agit sur le contact (3) et ferme le circuit avec le (2), le nombre de contacts n'est pas limité, la partie (3) peut être de forme conique avec des cercles métalliques formant contact et partant du centre, le premier cercle correspondant au contact (2), le deuxième cercle plus grand contact (3), le troisième cercle plus grand contact (2) et ainsi de suite, les contacts 2 et 3 se fermant au passage de la bille métallique.

5. Dispositif avertisseur selon les revendications 1 et 2, figure V , caractérisé par un pendule dont le contact (4) est formé d'une couronne conductrice réglable par rapport à un point de rotation (2) et plus ou moins rapproché du maximum de course du pendule. Les contacts (3 et 4) peuvent agir indifféremment dans tous les sens. La couronne peut être disposée à toutes les hauteurs et même autour du contre-poids n° 1 , qui pourra être en matière conductrice et servir ainsi de contact.

6. Dispositif avertisseur selon la revendication 1 et la figure VI, caractérisé par une ou plusieurs ampoules de verre ou autre matière contenant une dose de mercure qui agit sur les contacts. Ces ampoules sont maintenues solidaires et réglables les unes par rapport aux autres, inversées (accélération et freinage) le bouton (5) autorisant un réglage d'un angle plus ou moins ouvert par rapport à la ligne horizontale.

7. Dispositif avertisseur selon les revendications 1 et 6 et la figure VII , caractérisé par une ampoule en verre (3) contenant une dose de mercure (2) avec un angle déterminé par rapport à la ligne horizontale. Aux extrémités, les contacts (I) de chaque côté se ferment en fonction du mercure selon l'inertie.

8. Dispositif avertisseur selon la revendication 1 et la figure VIII, caractérisé par un émetteur de faisceaux lumineux, ou émetteur infrarouge et monté sur un axe (2), le contre-poids (3) ramenant le faisceau du phare en ligne horizontale. Un réglage est possible entre l'alignement vertical du contre-poids et le faisceau lumineux qui pourrait s'éloigner de l'horizontale. Ce dispositif pourrait être appliqué sur les véhicules pour le réglage automatique des phares selon l'assiette et la charge sur véhicule. Un amortisseur pneumatique, électronique, magnétique ou mécanique Figure 8 (4-5) pourrait domestiquer les mouvements désordonnés dûs aux cahots d'un véhicule, l'émetteur reste donc bloqué dans la position demandée.

9. Dispositif avertisseur selon la revendication 1, caractérisé par un liquide de couleur contenu dans un récipient dont un bord est transparent avec des marques donnant les indications sur la force de rupture d'équilibre qui éloignera le niveau de la ligne horizontale.

10. Dispositif avertisseur selon la revendication 1 et 7, caractérisé par deux contacts, figure 4 ou 7 fixés sur la clenche d'une porte ou fenêtre. Dès que l'angle de réglage est dépassé dans un sens ou dans l'autre, le contact est fermé mettant l'avertisseur en marche.

FIG. 1

FIG. 2

FIG. 3

FIG. 7

FIG. 8

FIG. 9

FIG. 4

FIG. 6

FIG. 7

**Office européen des brevets**

**RAPPORT DE RECHERCHE EUROPEENNE**

**0031983**
Numéro de la demande

EP 80 20 1246

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernee | |
| | AU - B - 494 156 (GALLINAN)<br>* Page 6, lignes 1-17 et figures 1-3 * | 1 | B 60 Q 9/00<br>B 60 Q 1/44 |
| | -- | | |
| | DE - A - 1 808 590 (STALKE)<br>* Page 6, lignes 1-12 et figures 1-5 * | 1 | |
| | -- | | |
| | FR - A - 2 451 583 (ALLOMBERT)<br>* En entier * | 1-3 | |
| | -- | | DOMAINES TECHNIQUES RECHERCHES (Int. Cl. 3) |
| | FR - A - 1 412 726 (BEYE-SMITS)<br>* Figures 1-5 * | 1,4 | B 60 Q 9/00<br>1/44 |
| | -- | | |
| | DE - A - 2 701 962 (BADORREK)<br>* Figures 1,2 * | 1,3,4 | |
| | -- | | |
| | FR - A - 2 334 111 (SEGARD)<br>* Figures 1-3 * | 1,7 | |
| | -- | | CATEGORIE DES DOCUMENTS CITES |
| | DE - A - 1 780 512 (THEISSEN)<br>* Figures * | 1,5 | X: particulièrement pertinent<br>A: arrière-plan technologique<br>O: divulgation non-écrite<br>P: document intercalaire<br>T: théorie ou principe à la base de l'invention |
| | -- | | |
| | FR - E - 81 996 (GIRY)<br>* Figures 1-4 * | 1,6 | E: demande faisant interférence<br>D: document cité dans la demande<br>L: document cité pour d'autres raisons |
| | -- | | |
| | ./. | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 05-04-1981 | ONILLON |

OEB Form 1503.1  06.78

**Office européen des brevets**

**RAPPORT DE RECHERCHE EUROPEENNE**

| Catégorie | Citation du document avec indication, en cas de besoin, des parties pertinentes | Revendica-tion concernée |
|---|---|---|
| | FR - A - 1 382 269 (DIRAND) <br> * Figures * <br><br> -- <br><br> FR - A - 2 172 502 (S.A. POUR L'EQUIPEMENT ELECTRIQUE DES VEHICULES S.E.V. MARCHAL) <br> * Figures 1,2 * <br><br> -- | 1,6 <br><br><br><br> 1,8 |
| A | US - A - 3 975 722 (ADLER) <br> * Résumé ; figures 1,5 * <br><br> ---- | 2,10 |

**DOCUMENTS CONSIDERES COMME PERTINENTS**

CLASSEMENT DE LA DEMANDE (Int. Cl. 3)

DOMAINES TECHNIQUES RECHERCHES (Int. Cl. 3)

OEB Form 1503.2 06.78